# EUROPÄISCHE PATENTSCHRIFT

(11) **EP 0 864 197 B1**
(45) Veröffentlichungstag und Bekanntmachung des Hinweises auf die Patenterteilung: **27.03.2002**
(21) Anmeldenummer: 96939873.4
(22) Anmeldetag: 21.11.1996
(51) Int. Cl.: H02P 6/20, H02P 1/16

(54) **VERFAHREN ZUR BESTIMMUNG DER ANFANGS-ROTORLAGE EINES SYNCHRONMOTORS**
METHOD OF DETERMINING THE INITIAL ROTOR POSITION OF A SYNCHRONOUS MOTOR
PROCEDE POUR DETERMINER LA POSITION INITIALE DU ROTOR D'UN MOTEUR SYNCHRONE

(30) Priorität: 27.11.1995 DE 19544183; 09.02.1996 DE 19604701
(43) Veröffentlichungstag der Anmeldung: 16.09.1998
(73) Patentinhaber: Sieb & Meyer Elektronik GmbH, 21339 Hamburg (DE)
(72) Erfinder: MEYER, Johannes, D-21339 Lüneburg (DE); SCHRÖTER, Gerhard, D-21339 Lüneburg (DE)
(74) Vertreter: Vonnemann, Gerhard, Dr.-Ing.
(86) Internationale Anmeldenummer: EP9605130
(87) Internationale Veröffentlichungsnummer: WO9720382

(56) Entgegenhaltungen:
- EP-A- 0 228 535
- EP-A- 0 670 627
- US-A- 4 746 850
- RECORD OF THE INDUSTRY APPLICATIONS CONFERENCE (IAS), ORLANDO, OCT. 8 - 12, 1995, Bd. 1, 8.Oktober 1995, INSTITUTE OF ELECTRICAL AND ELECTRONICS ENGINEERS, Seiten 741-747, XP000551001 OSTLUND S ET AL: "INITIAL ROTOR POSITION DETECTION FOR AN INTEGRATED PM SYNCHRONOUS MOTOR DRIVE"
- EPE'91, Bd. 3, 1991, FIRENZE, IT, Seiten 659-663, XP000617549 K. BACKHAUS ET AL: "A PROCEDURE TO ESTIMATE THE ABSOLUTE POSITION OF THE ROTOR FLUX OF A PERMANENT MAGNET SYNCHRONOUS MACHINE"

## Beschreibung

Die Erfindung betrifft Verfahren zur Bestimmung der Anfangslage eines Rotors bzw. Läufers eines in linearer oder rotativer Bauweise ausgeführten mehrphasigen Synchronmotors oder Reluktanzmotors, der von einem Frequenzumrichter gespeist wird, wobei dem Motor ein Teststrom mit vorgegebener Stromvektor-Phasenlage aufgeprägt und das daraus resultierende Drehmoment bzw. die Kraft bestimmt wird. Weiterhin betrifft die Erfindung eine Vorrichtung zur Durchführung des Verfahrens.

In Positioniereinrichtungen mit elektronisch gesteuerten Servoantrieben werden in zunehmendem Maße Synchronmotoren verwendet. Auch Reluktanzmotoren kommen zum Einsatz. Das gilt gleichermaßen für rotative und lineare Bauformen. Bei Synchronmotoren besteht aber im Gegensatz zu Gleichstrom- und Asynchronmotoren eine feste Beziehung zwischen der Lage des Läufers in Bezug auf den Stator und der Phasenlage des elektromagnetischen Wander- oder Drehfeldes. Beim Einschalten des Servoantriebs wird der in einer undefinierten Stellung befindliche Läufer unter Umständen ruckartig in die vom elektromagnetischen Wander- oder Drehfeld vorgegebene Stellung gebracht ("eingephast"), wobei der mechanische Ruck in Handhabungseinrichtungen zu Schäden an Maschinen oder Werkstücken führen kann.

Aus der US 47 46 850 ist ein Verfahren zum Erfassen der Läufer-Ruhelage eines Synchronmotors bekannt, bei dem ein hochfrequenter Teststrom in die Erregerwicklung eingespeist und die dadurch induzierten Spannungen in den Ständer-Phasenwicklungen gemessen wird. Aus deren Verhältnis wird die Ruhelage des Läufers bestimmt.

Bei einem ähnlichen Verfahren, das aus der EP 228 535 A1 bekannt ist, wird das hochfrequente Testsignal dem Ständerstrom oder der Ständerspannung aufgeprägt.

Aus dem Artikel von Backhaus, Reinold, Kalker: "A Procedure to Estimate the Absolute Position..." in: EPE-Konferenzbericht, Florenz, 1991, Band 3, Seiten 659 bis 663, ist ein Verfahren bekannt, bei dem ein in seiner Größe wachsender Teststrom in vorgegebener Phasenlage aufgeprägt wird. Überschreitet das durch ihn hervorgerufene Drehmoment das Gegenmoment, welches sich aus Reibmoment und Lastmoment zusammensetzt, dann wird der Teststrom registriert und abgeschaltet. Um das unbekannte, aber gleichbleibende Gegenmoment zu eliminieren, sind mindestens zwei Messungen bei unterschiedlichen Phasenwinkeln nötig. Aus diesen Messungen kann dann mit Hilfe eines Microcomputers die Ruhelage bestimmt werden. Dieser Vorgang kann bis zu fünf Sekunden dauern.

Aufgabe der Erfindung ist es, ein Verfahren der eingangs genannten Art zu verbessern, so daß mit einem geringeren Aufwand als bei bekannten Verfahren eine möglichst schnelle Bestimmung der Anfangslage erzielt wird. Eine weitere Aufgabe der Erfindung besteht darin, eine Vorrichtung zur Durchführung des Verfahrens anzugeben.

Die Lösung der Verfahrensaufgabe besteht darin, daß bei Feststellung eines Drehmoments bzw. einer Kraft die Vektor-Phasenlage des Teststroms in der Richtung gedreht wird, in der das Drehmoment bzw. die Kraft vermindert wird.

In der Praxis kann dieser Vorgang beispielsweise so ablaufen, daß die Steuerelektronik in einen definierten Grundzustand versetzt wird, der einer definierten Grundstellung der Phasenlage des Wander- oder Drehfeldvektors entspricht, daß die Drehstromwicklungen entsprechend der genannten Grundstellung mit im Verhältnis zur Nennstromstärke schwachen, vorzugsweisen von Null ansteigenden, Testströmen versorgt werden, wobei die am Läufer auftretenden Kräfte oder Drehmomente erfaßt werden, und daß die Phasenlage des Wander- oder Drehfeldes verändert wird, bis die Kraft oder das Drehmoment im wesentlichen verschwindet.

Dabei werden die für die Versorgung der Drehstromwicklungen vorgesehenen Ströme von der Steuerelektronik zunächst in bestimmte Verhältnisse zueinander gebracht, die eine erste Phasenlage des Feldvektors festlegen. Wenn nachfolgend die Testströme in dem festgelegten Verhältnis zueinander ansteigen, wird am Läufer ein Ansteigen der Kräfte bzw. Drehmomtente auftreten. Sobald diese meßbar sind, kann der nächste Verfahrensschritt, nämlich die Veränderung der Phasenlage in Richtung einer Verkleinerung der Kräfte bzw. Drehmomente, durchgeführt werden.

Beim erfindungsgemäßen Verfahren wird die Phasenlage des Wander- oder Drehfeldvektors gegenüber der mechanischen Lage des Motors justiert, ehe nennenswerte Kräfte oder Drehmomente erzeugt werden. Ein ruckartiges Einschwenken des Läufers wird mit Vorteil vermieden. Nach dem Einjustieren kann der Synchronmotor ruckfrei anfahren. Dabei ist der zur Durchführung des Verfahrens erforderliche apparative oder schaltungstechnische Aufwand mit Vorteil sehr viel geringer als beim Stand der Technik. Beispielsweise kann auf die Bereitstellung von hochfrequenten Testströmen oder auf einen zur Auswertung bestimmtem Microcomputer und die erforderliche Software verzichtet werden. Das erfindungsgemäße Verfahren verwendet auch keine aufwendigen Algorithmen, sondern gewinnt aus einem zur Feststellung des Drehmoments dienenden Signal auf einfachste Weise - fast direkt - eine Steuergröße zum Drehen der Vektor-Phasenlage. Dabei wird - im Unterschied zum Stand der Technik - der Lastwinkel Null durch Verändern der Strom-Phasenlage aufgesucht.

Das Verfahren kann noch dadurch verbessert werden, daß aus dem Verhältnis der Stärke der Kraft oder des Drehmoments zur Stärke des Teststroms der Lastwinkel bestimmt und die Phasenlage des Wander- oder Drehfeldes bei großem Lastwinkel schneller und bei kleinem Lastwinkel langsamer angepaßt wird. Diese Maßnahme macht sich den Umstand zu Nutze, daß die Kraft bzw. das Drehmoment ungefähr proportional zur Stromstärke multipliziert mit dem Sinus des Lastwinkels ist. Daraus folgt, daß der Quotient aus der Stärke der Kraft oder des Drehmoments geteilt durch die Stromstärke ungefähr proportional zum Sinus des Lastwinkels, bei kleinen Lastwinkeln also ungefähr proportional zum Lastwinkel selbst ist. Wenn nun der genannte Quotient groß ist, so bedeutet dies einen großen Lastwinkel, der durch eine schnelle Verschiebung des Wanderfeldes bzw. eine schnelle Drehung des Drehfeldes schnell verkleinert wird. Bei einem kleinen Lastwinkel hingegen wird die Phasenlage des Wander- oder Drehfeldes langsamer angepaßt. Durch diese Strategie erhält man insgesamt eine relativ schnelle Einregelung mit hoher Genauigkeit.

Die Genauigkeit der Einregelung kann noch dadurch verbessert werden, daß die Stromstärke der Testströme mit kleiner werdender Phasendifferenz erhöht wird, vorzugsweise bis zum Erreichen der Nennstromstärke. Durch diese Maßnahme wird die Stromstärke vom Lastwinkel abhängig, so daß einerseits bei großen Lastwinkeln eine zu große Kraft bzw. ein zu großes Drehmoment und damit ein Rucken des Läufers nicht befürchtet werden muß, während andererseits bei kleinen Lastwinkeln stets eine meßbare Kraft bzw. ein meßbares Drehmoment vorliegt, womit eine genauere Justierung bis zum Verschwinden des Lastwinkels möglich ist. Bei nahezu verschwindendem Lastwinkel können die Testströme ohne Gefahr bis zum Erreichen der Nennstromstärke gesteigert werden.

In einer Weiterbildung des erfindungsgemäßen Verfahrens ist vorgesehen, daß die Steuerelektronik anschließend an eine erste Justierung in einen zweiten Grundzustand versetzt wird, der einer von der ersten Grundstellung der Phasenlage des Wander- oder Drehfeldvektors abweichenden zweiten Grundstellung entspricht, und daß danach alle weiteren Verfahrensschritte wiederholt werden. Durch diese Maßnahme wird sichergestellt, daß auch in dem Fall eines ursprünglichen Lastwinkels von 180° ein sicheres und im wesentlichen ruckfreies Anfahren gewährleistet ist.

Bei einem Lastwinkel von exakt 180° treten nämlich unabhängig von der Stärke der Testströme keine Kräfte oder Drehmomente am Läufer auf. Deshalb führt ein erster Durchgang des Verfahrens in diesem Ausnahmefall nicht zur Anpassung des Lastwinkels. Hier kommt jetzt der zweite Durchgang des Verfahrens zum Zuge, bei dem die Steuerelektronik in einen zweiten Grundzustand versetzt wird, wobei der Wander- bzw. Drehfeldvektor eine von der ersten Grundstellung beispielsweise um 90° abweichende zweite Grundstellung einnimmt. Wenn der Lastwinkel im ersten Durchgang ausnahmsweise bei 180° lag, so ist er beim zweiten Durchgang mit Sicherheit kleiner als 180°. Durch die Wiederholung aller weiteren Verfahrensschritte erfolgt also spätestens im zweiten Durchgang eine Justierung des Lastwinkels, so daß er im wesentlichen verschwindet.

Eine einfache Vorrichtung zur Durchführung des Verfahrens nach einem der vorhergehenden Ansprüche mit einem in linearer oder rotativer Bauweise ausgeführten mehrphasigen Synchronmotor oder Reluktanzmotor, der von einem Frequenzumrichter gespeist wird, besteht im wesentlichen aus einem mit einem Rotor bzw. Läufer des Motors verbundenen Drehmomentsensor oder Kraftsensor und einer dem Sensor nachgeschalteten Zusatzsteuerung für den Frequenzumrichter zur Lieferung eines Teststroms mit vorgegebener Vektor-Phasenlage und zur Drehung der Vektor-Phasenlage des Teststroms in Abhängigkeit vom Signal des Drehmomentsensors oder Kraftsensors.

In einer bevorzugten Ausführungsform der Vorrichtung ist vorgesehen, daß bei einem elastischen Antriebsverband ein Weggeber oder Drehgeber eines vorhandenen Lagemeßsystems als Kraft- oder Drehmomentsensor dient, indem eine Auslenkung aus einer Ruhestellung zum Erfassen der Kraft oder des Drehmoments am Läufer gemessen wird. In diesem Fall ist kein zusätzlicher Kraft- oder Drehmomentsensor erforderlich. Der bei der Servoantriebsvorrichtung mit Lagemeßsystem ohnehin vorhandene Weggeber oder Drehgeber mißt einfach eine durch die Kraft bzw. das Drehmoment bedingte geringfügige Auslenkung. Dabei kann sowohl die Verschiebe- bzw. Drehrichtung als auch die Größe der Auslenkung, die ungefähr proportional dem Produkt aus Strom und Sinus des Lastwinkels ist, bestimmt werden. Der Läufer des Synchronmotors wird dabei je nach Größe der Kraft bzw. des Drehmoments mehr oder weniger elastisch ausgelenkt. Diese Maßnahme funktioniert auch in Verbindung mit den üblicherweise verwendeten inkrementalen Weggebern.

Das Anfahren des Synchronmotors wird in zwei Stufen durchgeführt. Zuerst wird gemäß der oben angegebenen Formel das Minimum der Kräfte- bzw. Momentenkurve einjustiert, wobei der zum Antrieb des Synchronmotors erforderliche Lastwinkel zu Null wird. Erst dann wird der für den gesteuerten Betrieb günstigste Lastwinkel eingestellt und Stromstärken für die Drehstromwicklungen vorgegeben, um den Synchronmotor in Bewegung zu setzen.

In Ausgestaltung der Vorrichtung mit inkrementalem Weggeber oder Drehgeber ist vorgesehen, daß die Steuerelektronik einen Inkrementalzähler aufweist, der aus den - gegebenenfalls mittels eines Untersetzers angepaßten - Impulsen des Inkrementalgebers eine digitale Phasenlageinformation bildet, die in einem angeschlossenen Funktionsgenerator in eine zwei- oder mehrphasige Drehstromvorgabe für den Synchronmotor umgewandelt wird.

Eine derartige Steuerelektronik arbeitet im wesentlichen digital mit der Folge einer erhöhten Zuverlässigkeit gegenüber Toleranzen und einer erhöhten Genauigkeit und Reproduzierbarkeit des Regelvorgangs.

In einer einfachen Ausgestaltung der Steuerelektronik weist die Zusatzsteuerung einen an den Inkrementalgeber oder Untersetzungszähler angeschlossenen Digital/Analog-Wandler mit einem nachfolgenden analogen Regelverstärker und einem vom Regelverstärker gesteuerten Impulsgenerator auf, der an den Inkrementalzähler Zählimpulse zur Vorgabe der Teststrom-Phasenlage abgibt. Dabei kann eine Veränderung der Phasenlage des Wander- oder Drehfeldes in Abhängigkeit von der am Inkrementalgeber festgestellten Auslenkung, die der Kraft bzw. dem Drehmoment am Läufer entspricht, durch einfaches Eingeben zusätzlicher Zählimpulse in den Inkrementalzähler herbeigeführt werden.

In weiterer Ausgestaltung der Steuerelektronik ist vorgesehen, daß der Regelverstärker eine Stromvorgabe zur Erzeugung der Kraft oder des Drehmoments am Läufer an den Funktionsgenerator abgibt. Der so gebildete Regelkreis regelt die Stromvorgabe in Abhängigkeit von den gemessenen Kräften bzw. Drehmomenten, wodurch diese stets so klein gehalten werden, daß ein unerwünschtes Rucken des Läufers nicht auftreten kann.

Andererseits ist es vorteilhaft, wenn der Regelverstärker die Motorströme bei sinkenden Kräften bzw. Drehmomenten ansteigen und die Impulsfolgefrequenz des Impulsgenerators abfallen läßt. Die Kraft bzw. das Drehmoment sinkt bei Annäherung der Phasenlage des Wander- bzw. Drehfeldvektors an den Vektor des Erregerfeldes bzw. bei Reluktanzmotoren an die Vorzugsrichtung des magnetischen Kreises. Bei sehr kleiner Phasendifferenz ist auch die Kraft bzw. das Drehmoment sehr klein. Um den Lastwinkel exakt auf Null justieren zu können, ist jedoch ein meßbares Drehmoment erforderlich. Um die Abnahme des Drehmoments bei abnehmendem Lastwinkel zu kompensieren, wird daher der Motorstrcm erhöht. Gleichzeitig wird die Impulsfolgefrequenz des Impulsgenerators verringert, um die ideale Winkelstellung durch eine langsamere Annäherung exakter einstellen zu können.

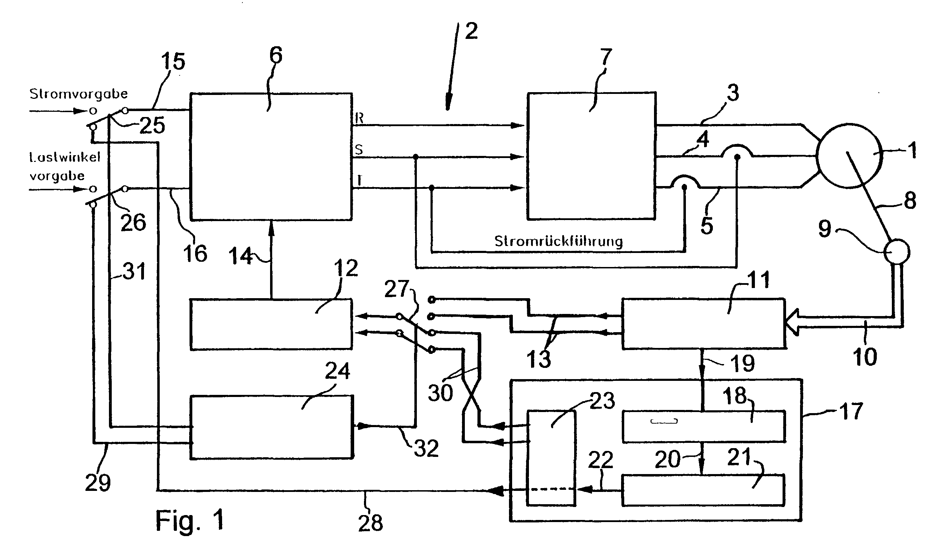

Weitere Vorteile und Einzelheiten der Erfindung ergeben sich aus der nachfolgenden Beschreibung eines Ausführungsbeispieles anhand der Zeichnung.

Die einzige Figur zeigt eine schematische Darstellung einer erfindungsgemäßen Servoantriebsvorrichtung in Form eines Blockschaltbildes.

Die dargestellte Servoantriebsvorrichtung weist einen elektrischen Synchronmotor 1 mit einem nicht gezeigten drehbaren Läufer und ebenfalls nicht gezeigten festen Drehstromwicklungen auf, wobei von einer in Fachkreisen bekannten Anordnung auszugehen ist. Weiterhin umfaßt die Servoantriebsvorrichtung eine Steuerelektronik 2, die praktisch die gesamte schematische Darstellung ausfüllt. Die Steuerelektronik 2 liefert über drei Zuleitungen 3,4,5 die elektrischen Ströme für die Drehstromwicklungen zur Erzeugung eines magnetischen Drehfeldes von einstellbarer Stärke und Kreisfrequenz. Die drei genannten Ströme sind in bekannter Weise als Drehstrom ausgestaltet, d.h. es handelt sich um drei sinusförmige Wechselströme gleicher Frequenz, die zueinander eine Phasenverschiebung von jeweils 120° aufweisen. Der Läufer des Synchronmotors 1 dreht sich synchron mit der Drehstromfrequenz, wobei das am Läufer auftretende Drehmoment einerseits von der Stromstärke und andererseits von der Winkeldifferenz zwischen dem Drehfeldvektor und dem Erregerfeld des Läufers, bei Reluktanzmotoren von der Vorzugsrichtung des magnetischen Kreises, abhängt.

Stromstärke und Kreisfrequenz werden in der Steuerelektronik 2 durch einen Funktionsgenerator 6 vorgegeben, der eine eingegebene digitale Richtungsinformation in drei Vorgaben R,S,T für die drei Komponenten des Drehstroms umwandelt. Dabei benutzt der Funktionsgenerator 6 eine fest vorprogrammierte Sinusfunktion und feste Phasenbeziehungen für die Vorgaben der drei Drehstromkomponenten.

Die drei Stromvorgaben R,S,T werden an eine Leistungseinheit 7 weitergegeben, in der die Ströme für die Drehstromwicklungen des Synchronmotors 1 entsprechend den Vorgaben erzeugt werden. Über die Zuleitungen 3,4,5 gelangt der Drehstrom zum Synchronmotor 1.

Der Synchronmotor 1 ist über eine mechanische Verbindung 8 mit einem Inkrementalgeber 9 verbunden. Bei einer Drehung des Synchronmotors 1 erzeugt der Inkrementalgeber 9 Impulse, die über eine Impulsleitung 10 in einen Untersetzungszähler 11 der Steuerelektronik 2 gelangen. Der Untersetzungszähler 11 paßt die Schrittweite des Inkrementalgebers 9 an die Schrittweite eines Inkrementalzählers 12 an, der mit dem Untersetzungszähler 11 über Zählleitungen 13 verbunden ist. Der Inkrementalzähler 12 zählt die vom Untersetzungszähler 11 gelieferten Impulse und bildet daraus eine digitale Drehrichtungsinformation, die über eine Datenleitung 14 in den Funktionsgenerator 6 eingegeben wird. Beim Betrieb des Synchronmotors 1 wird jetzt im Funktionsgenerator 6 die ständig wechselnde Winkelstellung des Läufers berücksichtigt. Weiterhin berücksichtigt der Funktionsgenerator 6 eine Stromvorgabe und eine Lastwinkelvorgabe für den Synchronmotor 1, die über eine Stromvorgabeleitung 15 und eine Lastwinkelvorgabeleitung 16 in den Funktionsgenerator 6 eingegeben werden.

Die Steuerelektronik 2 weist eine Baugruppe 17 auf, die zur Steuerung des Einphasens des Drehfeldes bestimmt ist. Die Baugruppe 17 besteht aus einem Digital/Analog-Wandler 18, der über eine Datenleitung 19 mit dem Untersetzungszähler 11 verbunden ist. Der Ausgang des Digital/Analog-Wandlers 18 ist über eine Signalleitung 20 mit einem Regelverstärker 21 verbunden, an dessen Ausgang ein Regelsignal anliegt:, das über eine Steuerleitung 22 in einen Impulsgenerator 23 gelangt.

Für die Synchronisation des Drehfeldes mit der Stellung des Läufers wird die Steuerelektronik 2 in einen besonderen Betriebszustand versetzt. Für diesen Zweck weist die Steuerelektronik 2 eine Ablaufsteuerungseinheit 24 auf, die zur Betätigung von drei Umschaltern 25,26,27 dient. Mit einem ersten Umschalter 25 wird die Stromvorgabeleitung 15 von der externen Stromvorgabe auf eine interne Stromvorgabeleitung 28 geschaltet, die mit der Baugruppe 17 verbunden ist. Über den zweiten Umschalter 26 wird die zum Funktionsgenerator 6 führende Lastwinkelvorgabeleitung 16 mit einer internen Lastwinkelvorgabeleitung 29 verbunden, die zur Ablaufsteuerungseinheit 24 führt. Der dritte Umschalter 27 verbindet den Inkrementalzähler 12 im Normalbetrieb über die Zählleitungen 13 mit dem Untersetzungszähler 11 und im Einphasungsbetrieb über Einphasungsleitungen 30 mit dem Impulsgenerator 23. Die Betätigung der Umschalter 25,26,27 erfolgt über Umschaltleitungen 31,32.

Bei Aktivierung der Steuerelektronik wird diese in den Einphasungsmodus geschaltet und die Ablaufsteuerungseinheit 24 bringt die Umschalter 25,26,27 in die bildlich dargestellten Stellungen. Gleichzeitig gibt die Ablaufsteuerungseinheit 24 über die Lastwinkelvorgabeleitung 29 eine Winkelvorgabe für den Drehfeldvektor in den Funktionsgenerator 6 ein. Wenn am Läufer des Synchronmotors 1 ein Drehmoment erzeugt wird, gelangen Impulse vom Inkrementalgeber 9 über den Untersetzungszähler 11 in den Analog/Digital-Wandler 18 und von dort in den Regelverstärker 21, der über ein Steuersignal 22 den Impulsgenerator 23 zur Abgabe von Impulsen an den Inkrementalzähler 12 veranlaßt. Der Inkrementalzähler 12 erzeugt an seinem Ausgang digitale Richtungsdaten, die über die Datenleitung 14 in den Funktionsgenerator 6 gelangen, der aufgrund dieser Richtungsdaten die Drehstromvorgaben R,S,T entsprechend einer Drehung des Drehfeldvektors verändert. Das so gedrehte magnetische Drehfeld ruft jetzt ein kleineres Drehmoment am Läufer hervor, so daß über den Inkrementalgeber 9 und den Untersetzungszähler 11 eine kleinere Auslenkung mittels Datenleitung 19 in den Digital/Analog-Wandler 18 eingegeben wird. Der Regelverstärker 21 reagiert auf die geänderte Auslenkungsinformation, indem er über die Steuerleitung 22 sowohl die Stromvorgabe in der Stromvorgabeleitung 28 erhöht, als auch eine geringere Zahl von Zählimpulsen über die Einphasungsleitungen 30 an den Inkrementalzähler 12 abgibt.

Nachdem das gemessene Drehmoment - gegebenenfalls bis auf einen unwesentlichen Rest - endgültig abgesunken ist, ist der erste Durchgang beendet. Im zweiten Durchgang wird die Regelung noch einmal mit einer anderen Winkelvorgabe für die Grundstellung des Drehfeldvektors wiederholt. Danach schaltet die Ablaufsteuereinheit 24 die Umschalter 25,26,27 in ihre Normalbetriebsstellung und der Synchronmotor 1 kann unter Vorgabe des Stroms und des Lastwinkels angefahren werden.

Eine entsprechend angepaßte Servoantriebsvorrichtung mit Steuerungsverfahren kann auch zum ruckfreien oder ruckarmen Anfahren bzw. Inbetriebnahme eines Linearmotors verwendet werden. Voraussetzung ist lediglich eine feste Beziehung (Synchronisierung) zwischen einem Erregerfeld, beispielsweise einem periodischen Dipolfeld eines ortsfesten Stators, und einem durch mehrphasige Ströme verschiebbaren Wanderfeld, beispielsweise einem Drehstromfeld eines linear beweglichen Läufers. Die auf den rotierenden Drehstrommotor bezogenen Begriffe sind in diesem Fall gegen entsprechende Begriffe des Linearmotors auszutauschen.

### Bezugszeichenliste

- 1: Synchronmotor
- 2: Steuerelektronik
- 3: Zuleitung
- 4: Zuleitung
- 5: Zuleitung
- 6: Funktionsgenerator
- 7: Leistungseinheit
- 8: mechanische Verbindung
- 9: Inkrementalgeber
- 10: Impulsleitung
- 11: Untersetzungszähler
- 12: Inkrementalzähler
- 13: Zählleitungen
- 14: Datenleitung
- 15: Stromvorgabeleitung
- 16: Lastwinkelvorgabeleitung
- 17: Baugruppe
- 18: Digital/Analog-Wandler
- 19: Datenleitung
- 20: Signalleitung
- 21: Regelverstärker
- 22: Steuerleitung
- 23: Impulsgenerator
- 24: Ablaufsteuerungseinheit
- 25: erster Umschalter
- 26: zweiter Umschalter
- 27: dritter Umschalter
- 28: Stromvorgabeleitung
- 29: Lastwinkelvorgabeleitung
- 30: Einphasungsleitungen
- 31: Umschaltleitung
- 32: Umschaltleitung

## Patentansprüche

1. Verfahren zur Bestimmung der Anfangslage eines Rotors bzw. Läufers eines in linearer oder rotativer Bauweise ausgeführten mehrphasigen Synchronmotors (1) oder Reluktanzmotors, der von einem Frequenzumrichter (6, 7) gespeist wird, wobei dem Motor (1) ein Teststrom mit vorgegebener Stromvektor-Phasenlage aufgeprägt und das daraus resultierende Drehmoment bzw. die Kraft bestimmt wird, **dadurch gekennzeichnet, daß** bei Feststellung eines Drehmoments bzw. einer Kraft die Vektor-Phasenlage des Teststroms in der Richtung gedreht wird, in der das Drehmoment bzw. die Kraft vermindert wird.

2. Verfahren nach Anspruch 1, **dadurch gekennzeichnet, daß** aus dem Verhältnis der Stärke der Kraft oder des Drehmoments zur Stärke des Drehstroms der Lastwinkel bestimmt und die Phasenlage des Wander- oder Drehfeldes bei großem Lastwinkel schneller und bei kleinem Lastwinkel langsamer angepaßt wird.

3. Verfahren nach Anspruch 2, **dadurch gekennzeichnet, daß** die Stromstärke der Testströme mit kleiner werdender Phasendifferenz erhöht wird, vorzugsweise bis zum Erreichen der Nennstromstärke.

4. Verfahren nach einem der Ansprüche 1 bis 3, **dadurch gekennzeichnet, daß** eine Steuerelektronik (2) anschließend an den ersten Durchgang in einen zweiten Grundzustand versetzt wird, der einer von der ersten Grundstellung des Wander- oder Drehfeldvektors abweichenden zweiten Grundstellung entspricht, und daß danach alle weiteren Verfahrensschritte wiederholt werden.

5. Vorrichtung zur Durchführung des Verfahrens nach einem der vorhergehenden Ansprüche mit einem in linearer oder rotativer Bauweise ausgeführten mehrphasigen Synchronmotor (1) oder Reluktanzmotor, der von einem Frequenzumrichter (6, 7) gespeist wird, **gekennzeichnet durch** einen mit einem Rotor bzw. Läufer des Motors verbundenen Drehmomentsensor (9, 11) oder Kraftsensor und eine dem Sensor nachgeschaltete Zusatzsteuerung (12, 14, 17) für den Frequenzumrichter (6, 7) zur Lieferung eines Teststroms mit vorgegebener Vektor-Phasenlage und zur Drehung der Vektor-Phasenlage des Teststroms in Abhängigkeit vom Signal des Drehmomentsensors (9, 11) oder Kraftsensors.

6. Vorrichtung nach Anspruch 5, **dadurch gekennzeichnet, daß** bei einem elastischen Antriebsverband ein Weggeber oder Drehgeber (9) eines vorhandenen Lagemeßsystems als Kraft- oder Drehmomentsensor dient, indem eine Auslenkung aus einer Ruhestellung zum Erfassen der Kraft oder des Drehmoments am Läufer gemessen wird.

7. Vorrichtung nach Anspruch 6, **dadurch gekennzeichnet, daß** der Weggeber oder Drehgeber als Inkrementalgeber (9) ausgestaltet ist, der Impulse an die Steuerelektronik (2) abgibt.

8. Vorrichtung nach Anspruch 7, **dadurch gekennzeichnet, daß** die Steuerelektronik (2) einen Inkrementalzähler (12) aufweist, der aus den - gegebenenfalls mittels eines Untersetzungszählers (11) angepaßten - Impulsen des Inkrementalgebers (9) eine digitale Phasenlageinformation bildet, die in einem angeschlossenen Funktionsgenerator (6) in eine zwei- oder mehrphasige Drehstromvorgabe (R,S,T) für den Synchronmotor (1) umgewandelt wird.

9. Vorrichtung nach Anspruch 8, **dadurch gekennzeichnet, daß** die Zusatzsteuerung (17) einen an den Inkrementalgeber oder Untersetzungszähler (11) angeschlossenen Digital/Analog-Wandler (18) mit einem nachfolgenden analogen Regelverstärker (21) und einem vom Regelverstärker (21) gesteuerten Impulsgenerator (23) aufweist, der an den Inkrementalzähler (12) Zählimpulse zur Vorgabe der Teststrom-Phasenlage abgibt.

10. Vorrichtung nach Anspruch 9, **dadurch gekennzeichnet, daß** der Regelverstärker (21) eine Stromvorgabe (28) zur Erzeugung der Kraft oder des Drehmoments am Läufer an den Funktionsgenerator (6) abgibt.

11. Vorrichtung nach Anspruch 10, **dadurch gekennzeichnet, daß** der Regelverstärker (21) die Motorströme bei sinkender Kraft bzw. Drehmoment ansteigen und die Impulsfolgefrequenz des Impulsgenerators (23) abfallen läßt.

## Claims

1. A process for determining the initial position of a rotor of a polyphase synchronous motor (1) or reluctance motor which is of linear or rotative design and which is fed by a frequency converter (6, 7). wherein a test current with predetermined phase position of the current vector is impressed onto the motor (1) and the torque or the force resulting therefrom is determined, **characterised in that** when a torque or force is established the vector phase position of the test current is rotated in the direction in which the torque or the force is diminished.

2. Process according to Claim 1, **characterised in that** the load angle is determined from the ratio of the strength of the force or of the torque to the intensity of the rotary current and the phase position of the travelling or rotating field is adapted more rapidly in the case of a large load angle and more slowly in the case of a small load angle.

3. Process according to Claim 2, **characterised in that** the current intensity of the test currents is increased with diminishing phase difference. preferably until the rated current intensity is attained.

4. Process according to one of Claims 1 to 3, **characterised in that** an electronic controller (2) is set, subsequent to the first run-through, to a second ground state which corresponds to a second basic setting differing from the first basic setting of the travelling-field vector or rotating-field vector, and **in that** after this all the other process steps are repeated.

5. A device for implementing the process according to one of the preceding claims with a polyphase synchronous motor (1) or reluctance motor which is of linear or rotative design and which is fed by a frequency converter (6, 7), **characterised by** a torque-sensor (9, 11) or force-sensor connected to a rotor of the motor and an ancillary control system (12, 14, 17) connected downstream of the sensor for the frequency converter (6, 7) for supplying a test current with predetermined vector phase position and for rotating the vector phase position of the test current as a function of the signal of the torque-sensor (9, 11) or force-sensor.

6. Device according to Claim 5, **characterised in that** in the case of an elastic drive connection a displacement transducer or rotary transducer (9) of an existing position-measuring system serves by way of force-sensor or torque-sensor, by a deflection out of a rest-position being measured for the purpose of capturing the force or the torque on the rotor.

7. Device according to Claim 6, **characterised in that** the displacement transducer or rotary transducer is configured as an incremental transducer (9) which emits pulses to the electronic controller (2).

8. Device according to Claim 7, **characterised in that** the electronic controller (2) comprises an incremental counter (12) which derives from the pulses - optionally adapted by means of a scaling counter (11) - of the incremental transducer (9) an item of digital phase-position information which is converted in a connected function generator (6) into a two-phase or polyphase rotary-current default (R. S, T) for the synchronous motor (1).

9. Device according to Claim 8, **characterised in that** the ancillary control system (17) comprises a digital/analogue converter (18) connected to the incremental transducer or scaling counter (11) with a following analogue regulating amplifier (21) and with a pulse generator (23) which is controlled by the regulating amplifier (21) and which emits counting-pulses to the incremental counter (12) for the purpose of presetting the phase position of the test current.

10. Device according to Claim 9, **characterised in that** the regulating amplifier (21) emits a current default (28) to the function generator (6) for the purpose of generating the force or the torque on the rotor.

11. Device according to Claim 10, **characterised in that** the regulating amplifier (21) causes the motor currents to rise in the case of declining force or torque and causes the pulse-train frecuency of the pulse generator (23) to fall.

## Revendications

1. Procédé pour déterminer la position initiale d'un rotor ou d'un organe mobile d'un moteur synchrone polyphasé (1) rotatif ou linéaire ou d'un moteur à réluctance, alimenté par un convertisseur de fréquence (6, 7), selon lequel on applique au moteur (1) un courant de contrôle avec une phase prédéterminée du vecteur d'intensité et on détermine le couple ou la force qui en résulte,
**caractérisé en ce qu'**
en constatant un couple ou une force on fait tourner la phase du vecteur du courant de contrôle dans la direction dans laquelle le couple ou la force diminue.

2. Procédé selon la revendication 1,
**caractérisé en ce qu'**
à partir du rapport de l'intensité de la force ou du couple et de l'intensité du courant tournant on détermine l'angle de charge et on adapte la phase du champ variable ou du champ tournant, rapidement pour un angle de charge important, et lentement pour un angle de charge faible.

3. Procédé selon la revendication 2,
**caractérisé en ce qu'**
on augmente l'intensité des courants de contrôle lorsque la différence de phase diminue de préférence jusqu'à atteindre l'intensité du courant nominal.

4. Procédé selon l'une quelconque des revendications 1 à 3,
**caractérisé en ce qu'**
à la suite d'un premier passage on met l'électronique de commande (2) dans un second état de base qui correspond à une seconde position de base différente de la première position de base du vecteur de champ variable ou de champ tournant et ensuite on répète toutes les autres étapes du procédé.

5. Dispositif pour la mise en oeuvre du procédé selon l'une des revendications précédentes pour un moteur synchrone polyphasé (1), linéaire ou rotatif ou un moteur à réluctance, alimenté par un convertisseur de fréquence (6, 7),
**caractérisé par**
un capteur de couple (9, 11) ou un capteur de force relié au rotor ou à l'organe mobile du moteur et une commande supplémentaire (12, 14, 17) en aval du capteur pour le convertisseur de fréquence (6, 7) pour fournir un courant de contrôle avec une phase prédéterminée du vecteur et pour faire tourner la phase du vecteur du courant de contrôle en fonction du signal du capteur de couple (9, 11) ou du capteur de force.

6. Dispositif selon la revendication 5,
**caractérisé en ce que**
pour un ensemble d'entraînement élastique, un capteur de course ou un capteur de rotation (9) d'un système de mesure de position, existant sert de capteur de force ou de couple en mesurant un débattement à partir d'une position de repos pour capter la force ou le couple sur le rotor.

7. Dispositif selon la revendication 6,
**caractérisé en ce que**
le capteur de course ou le capteur de rotation est constitué par un capteur incrémental (9) qui fournit les impulsions à l'électronique de commande (2).

8. Dispositif selon la revendication 7,
**caractérisé en ce que**
l'électronique de commande (2) comporte un compteur incrémental (12) qui partant des impulsions du capteur incrémental (9) (le cas échéant adapté par un compteur démultiplicateur (11)) forme une information numérique de phase qui sera convertie dans un générateur de fonction (6) en une consigne de courant tournant à deux ou plusieurs phases (R, S, T) pour le moteur synchrone (1).

9. Dispositif selon la revendication 8,
**caractérisé en ce que**
la commande supplémentaire (17) comporte un convertisseur numérique/analogique (18) relié au capteur incrémental ou au compteur démultiplicateur (11) suivi d'un amplificateur analogique de régulation (21) et d'un générateur d'impulsion (23) commandé par l'amplificateur régulateur (21), le générateur fournissant au compteur incrémental (12) les impulsions de comptage pour prédéfinir la phase du courant de contrôle.

10. Dispositif selon la revendication 9,
**caractérisé en ce que**
l'amplificateur de régulation (21) fournit au générateur de fonction (6) une consigne de courant (28) pour générer la force ou le couple par le rotor.

11. Dispositif selon la revendication 10,
**caractérisé en ce que**
l'amplificateur de régulation (21) fait augmenter les courants du moteur lorsque la force ou le couple diminue, et laisse diminuer les fréquences des impulsions du générateur d'impulsion (23).
